# EUROPÄISCHE PATENTANMELDUNG

(11) **EP 2 353 659 A1**
(43) Veröffentlichungstag der Anmeldung: **10.08.2011**
(21) Anmeldenummer: 11000770.5
(22) Anmeldetag: 01.02.2011
(51) Int. Cl.: A63B 21/00, B62D 1/02, B60W 30/18, B62M 6/40, B62M 6/00, B60K 16/00, B60L 8/00

(54) **Kraftfahrzeug mit einer Trainingsvorrichtung**

(30) Priorität: 02.02.2010 DE 102010006704
(71) Anmelder: Hägele, Martin, F., 73560 Böbingen (DE)
(72) Erfinder: Hägele, Martin, F., 73560 Böbingen (DE)
(74) Vertreter: Schmidt, Sven Hendrik

(57) **Zusammenfassung**

Die Erfindung betrifft ein Kraftfahrzeug, insbesondere Personenkraftwagen
- mit einem Antriebsmotor, der Antriebsleistung auf Antriebsräder überträgt;
- mit einer durch einen Fahrer des Kraftfahrzeugs betätigbaren Steuervorrichtung, mit welcher die Leistungsabgabe des Antriebsmotors auf die Antriebsräder steuerbar ist;
- mit einer Fahrerfitnesseinrichtung, die wenigstens einen entgegen einer Gegenkraft beweglichen Aktuator umfasst, der durch Muskelkraft des Fahrers betätigbar ist.

Die Erfindung ist dadurch gekennzeichnet, dass die Steuervorrichtung und die Fahrerfitnesseinrichtung wahlweise kombinierbar oder permanent integriert sind, derart, dass die Steuervorrichtung die Leistungsabgabe des Antriebsmotors in Abhängigkeit der auf die Fahrerfitnesseinrichtung aufgebrachten Muskelkraft steuert oder regelt.

## Beschreibung

Die vorliegende Erfindung betrifft ein Kraftfahrzeug mit einer Trainingsvorrichtung gemäß dem Oberbegriff von Anspruch 1.

Es ist bekannt, dass Personen, welche einen erheblichen Anteil ihrer Lebenszeit in Kraftfahrzeugen verbringen, aufgrund der mangelnden körperlichen Betätigung einer Degeneration des Bewegungsapparates und besonderen gesundheitlichen Risiken, insbesondere durch Übergewicht und/oder Herz-Kreislauf-Erkrankungen ausgesetzt sind. Zur Abhilfe wird in der Offenlegungsschrift DE 10 2006 052 576 A1 vorgeschlagen, ein Fahrzeug mit zumindest einer Trainingsvorrichtung auszustatten, welche ein Fahrer, während er sich im Fahrzeug aufhält, betätigen kann, um seinen Bewegungsapparat zu stärken und den Kreislauf in Schwung zu bringen.

Obwohl mit der in der DE 10 2006 052 576 A1 beschriebenen Trainingsvorrichtung theoretisch zahlreiche verschiedene Übungen ausgeführt werden können, um diverse Muskelpartien zu stärken, besagt ein bekannter Erfahrungswert, dass es für einen Fahrzeuginsassen, insbesondere den Fahrer, einer großen Überwindung bedarf, insbesondere wenn eine Degeneration der Muskulatur und/oder des Kreislaufes bereits vorangeschritten ist und somit die körperliche Fitness gering ist, die Trainingsvorrichtung auch zu nutzen. So setzt eine spürbare Wirkung des Trainings bekanntlich erst nach mehreren Trainingsstunden bei regelmäßigem Training ein. Die unmittelbaren Anreize, die Trainingsvorrichtung zu betätigen, sind demnach gering.

Der vorliegenden Erfindung liegt die Aufgabe zugrunde, ein Kraftfahrzeug mit einer Trainingsvorrichtung anzugeben, bei welchem der Anreiz, die Trainingsvorrichtung zu betätigen, gegenüber dem beschriebenen Stand der Technik erheblich erhöht ist.

Die erfindungsgemäße Aufgabe wird durch ein Kraftfahrzeug mit den Merkmalen von Anspruch 1 gelöst. In den abhängigen Ansprüchen sind vorteilhafte und besonders zweckmäßige Ausgestaltungen der Erfindung angegeben.

Das erfindungsgemäße Kraftfahrzeug, das insbesondere als Personenkraftwagen ausgeführt ist, weist, wie üblich, einen Antriebsmotor auf, der Antriebsleistung auf Antriebsräder überträgt. Ferner ist eine Steuervorrichtung vorgesehen, die durch den Fahrer betätigbar ist, und mit welcher die Leistungsabgabe des Antriebsmotors auf die Antriebsräder steuerbar oder regelbar ist.

Das Kraftfahrzeug weist eine Fahrerfitnesseinrichtung auf, die wenigstens einen entgegen einer Gegenkraft beweglichen Aktuator umfasst, der durch die Muskelkraft des Fahrers betätigbar ist. Demnach setzt die Fahrerfitnesseinrichtung der betätigenden Bewegung des Aktuators durch den Fahrer einen Widerstand entgegen, den der Fahrer mit seiner Muskelkraft überwinden muss.

Erfindungsgemäß sind die Steuervorrichtung und die Fahrerfitnesseinrichtung entweder wahlweise miteinander kombinierbar oder permanent integriert, derart, dass die Steuervorrichtung die Leistungsabgabe des Antriebsmotors in Abhängigkeit der auf die Fahrerfitnesseinrichtung aufgebrachten Muskelkraft steuert. Im ersten Fall ist demnach die Fahrerfitnesseinrichtung abschaltbar, so dass das Fahrzeug ganz "normal", das heißt ohne besondere Muskelkraft gesteuert werden kann. In der zweiten "integrierten" Ausführungsform ist der Fahrer zum Steuern des Fahrzeugs gezwungen, die Fahrerfitnesseinrichtung zu betätigen.

Somit bewegt sich das Fahrzeug demnach schneller, wenn der Fahrer die Fahrerfitnesseinrichtung stärker betätigt, das heißt mehr Muskelkraft beziehungsweise Antriebsleistung auf die Fahrerfitnesseinrichtung aufbringt. Diese stärkere Betätigung kann durch eine schnellere Betätigung und/oder durch eine kräftigere Betätigung erfolgen. Das Kraftfahrzeug reagiert somit, ähnlich wie bei einem Fahrrad, unmittelbar auf die Anstrengung des Fahrers und verschafft dem Fahrer bei einer erhöhten Anstrengung eine vom Fahrer als positiv aufgenommene Rückmeldung. Im Gegensatz zu einem Fahrrad wird jedoch das Kraftfahrzeug, das insbesondere als geschlossener oder offener Personenkraftwagen mit zwei bis fünf oder auch sieben Sitzplätzen ausgestattet ist, primär durch den Antriebsmotor angetrieben, da es in der Regel ein Gewicht von ein bis zwei Tonnen oder mehr aufweist, und die durch den Fahrer aufgebrachte Antriebsleistung, welche er in die Fahrerfitnesseinrichtung einbringt, liefert keinen nennenswerten Beitrag zur Gesamtantriebsleistung, sondern liegt nur im Prozent- oder Promillebereich. Ziel der Verkoppelung zwischen der Fahrerfitnesseinrichtung und der Steuervorrichtung, mit welcher die Leistungsabgabe des Antriebsmotors auf die Antriebsräder steuerbar ist, ist es nur, den Fahrer für eine erhöhte Anstrengung sozusagen zu belohnen.

Demgemäß ist die Steuervorrichtung vorteilhaft derart eingerichtet, dass sie die Leistungsabgabe des Antriebsmotors mit zunehmender auf die Fahrerfitnesseinrichtung aufgebrachter Muskelkraft, insbesondere mit zunehmendem auf die Fahrerfitnesseinrichtung durch den Fahrer aufgebrachtes Drehmoment und/oder Drehzahl, erhöht.

Vorteilhaft ist das Verhältnis zwischen Antriebsleistung des Antriebsmotors und Antriebsleistung der Fahrerfitnesseinrichtung, das heißt der vom Fahrer aufgebrachten Leistung, variabel einstellbar, um gezielt die für einen Fitnessgrad des Fahrers geeignete "Übersetzung" zu lindern/einzustellen.

Günstig ist es, wenn die Fahrerfitnesseinrichtung als Aktuator einen Kurbelantrieb mit Pedalen und/oder Handgriffen und/oder ein Rudergerät aufweist. Andere Formen der Fahrerfitnesseinrichtung sind natürlich möglich, beispielsweise mit Zugeinrichtungen, Schwenkeinrichtungen oder Presseinrichtungen.

Gemäß einer Ausführungsform steht die Fahrerfitnesseinrichtung in Triebverbindung mit den Antriebsrädern, einem Nebenaggregat des Kraftfahrzeugs und/oder einer Energiespeichereinrichtung, um die vom Fahrer auf die Fahrerfitnesseinrichtung ausgeübte Muskelkraft als Leistung den Antriebsrädern und/oder dem Nebenaggregat zuzuführen und/oder in der Energiespeichereinheit zu speichern.

Die Fahrerfitnesseinrichtung kann beispielsweise einen elektrischen Generator aufweisen, mittels welchem die vom Fahrer aufgebrachte Muskelkraft in elektrische Energie umwandelbar ist. Dabei ist der elektrische Generator vorteilhaft motorisch betreibbar oder es ist ein zusätzlicher Elektromotor an der Energiespeichereinrichtung angeschlossen, um die gespeicherte elektrische Energie wieder in Antriebsleistung zum Antrieb der Antriebsräder oder eines sonstigen Nebenaggregats des Kraftfahrzeugs umzuwandeln.

Die Erfindung soll nachfolgend anhand eines Ausführungsbeispiels und der Figur exemplarisch beschrieben werden.

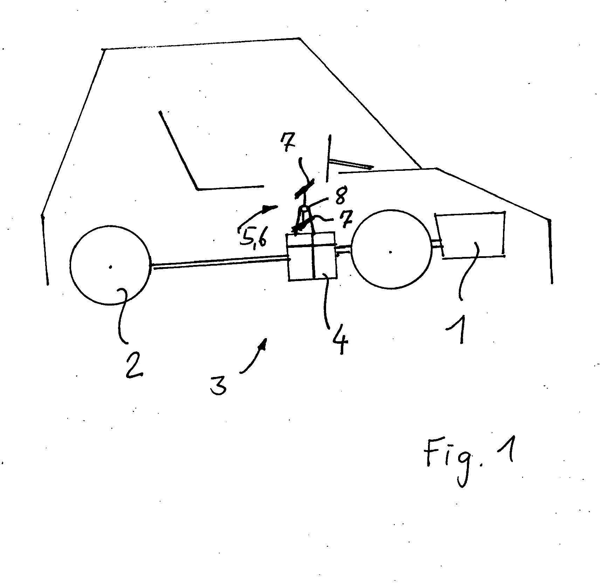

In der Figur 1 erkennt man sehr schematisch einen Personenkraftwagen mit einem Antriebsmotor 1, beispielsweise Verbrennungsmotor, dessen Antriebsleistung auf Antriebsräder 2 übertragen werden. Im Antriebsstrang 3 des Personenkraftwagens ist ferner eine Elektromotorgeneratoreinheit 4 vorgesehen, welche im generatorischen Betrieb Antriebsenergie in Form elektrischer Energie speichern kann, beispielsweise um den Antriebsstrang abzubremsen oder auch aktiv angetrieben durch den Antriebsmotor 1, der beispielsweise als Verbrennungsmotor ausgeführt ist, und welche im motorischen Betrieb elektrische Energie aus einem integrierten oder separaten Energiespeicher (nicht dargestellt) in den Antriebsstrang 3 einspeisen kann, beispielsweise zum Antrieb der Antriebsräder 2 und/oder eines hier nicht dargestellten Nebenaggregates.

Das Kraftfahrzeug, hier in Form des Personenkraftwagens, weist eine durch den Fahrer betätigbare Steuervorrichtung 5 auf, mit welcher die Leistungsabgabe des Antriebsmotors 1 auf die Antriebsräder 2 durch den Fahrer steuerbar ist. Die Steuervorrichtung 5 ist hierbei als Fahrerfitnesseinrichtung 6, umfassend zwei Pedale 7, auf einer drehbaren Kurbelwelle 8 ausgeführt, wobei die drehbare Kurbelwelle 8 in einer Triebverbindung mit der Motorgeneratoreinheit 4 steht. Wenn der Fahrer nun die Fahrerfitnesseinrichtung 6 betätigt, so wird in Abhängigkeit der Betätigungskraft beziehungsweise der Betätigungsgeschwindigkeit zum einen die hieraus resultierende durch den Fahrer aufgebrachte Antriebsleistung in die Motorgeneratoreinheit 4 eingeleitet, um in dem in dieser integrierten oder separaten Energiespeicher gespeichert zu werden und/oder zum Antrieb des Antriebsstranges 3 genutzt zu werden, und zum anderen wird die Leistungsabgabe des Antriebsmotors 1 in Abhängigkeit der vom Fahrer in die Fahrerfitnesseinrichtung 6 durch seine Muskelkraft eingebrachten Antriebsleistung eingestellt. Je stärker der Fahrer in die Pedale 7 tritt, desto mehr Antriebsleistung gibt auch der Antriebsmotor 1 ab, und je weniger stark der Fahrer in die Pedale 7 tritt, desto weniger groß ist die vom Antriebsmotor 1 in den Antriebsstrang 3 eingeleitete Antriebsleistung. Dies macht sich für den Fahrer durch Erhöhung oder Verminderung der Fahrgeschwindigkeit des Kraftfahrzeugs bemerkbar.

## Patentansprüche

1. Kraftfahrzeug, insbesondere Personenkraftwagen,
1.1 mit einem Antriebsmotor (1), der Antriebsleistung auf Antriebsräder (2) überträgt;
1.2 mit einer durch einen Fahrer des Kraftfahrzeugs betätigbaren Steuervorrichtung (5), mit welcher die Leistungsabgabe des Antriebsmotors (1) auf die Antriebsräder (2) steuerbar ist;
1.3 mit einer Fahrerfitnesseinrichtung (6), die wenigstens einen entgegen einer Gegenkraft beweglichen Aktuator umfasst, der durch Muskelkraft des Fahrers betätigbar ist;
**dadurch gekennzeichnet, dass**
1.4 die Steuervorrichtung (5) und die Fahrerfitnesseinrichtung (6) wahlweise kombinierbar oder permanent integriert sind, derart, dass die Steuervorrichtung (5) die Leistungsabgabe des Antriebsmotors (1) in Abhängigkeit der auf die Fahrerfitnesseinrichtung (6) aufgebrachten Muskelkraft steuert oder regelt.

2. Kraftfahrzeug gemäß Anspruch 1, **dadurch gekennzeichnet, dass** die Steuervorrichtung (5) eingerichtet ist, um die Leistungsabgabe des Antriebsmotors (1) mit zunehmender auf die Fahrerfitnesseinrichtung (6) aufgebrachten Muskelkraft zu erhöhen.

3. Kraftfahrzeug gemäß einem der Ansprüche 1 oder 2, **dadurch gekennzeichnet, dass** die Fahrerfitnesseinrichtung (6) als Aktuator einen Kurbelantrieb mit Pedalen (7) und/oder Handgriffen und/oder ein Rudergerät aufweist.

4. Kraftfahrzeug gemäß einem der Ansprüche 1 bis 3, **dadurch gekennzeichnet, dass** die Fahrerfitnesseinrichtung (6) in Triebverbindung mit den Antriebsrädern (2), einem Nebenaggregat des Kraftfahrzeugs oder einer Energiespeichereinrichtung steht, um die vom Fahrer auf die Fahrerfitnesseinrichtung (6) ausgeübte Muskelkraft als Leistung den Antriebsrädern (2) und/oder dem Nebenaggregat zuzuführen und/oder in der Energiespeichereinheit zu speichern.

5. Kraftfahrzeug gemäß Anspruch 4, **dadurch gekennzeichnet, dass** die Fahrerfitnesseinrichtung (6) einen elektrischen Generator aufweist, mittels welchem die vom Fahrer aufgebrachte Muskelkraft in elektrische Energie umwandelbar ist.

6. Kraftfahrzeug gemäß Anspruch 5, **dadurch gekennzeichnet, dass** der elektrische Generator motorisch betreibbar ist oder ein zusätzlicher Elektromotor an der Energiespeichereinrichtung angeschlossen ist, um die gespeicherte elektrische Energie wieder in Antriebsleistung zum Antrieb der Antriebsräder (2) oder eines sonstigen Nebenaggregats des Kraftfahrzeugs umzuwandeln.
